# EUROPÄISCHE PATENTANMELDUNG

(11) **EP 2 623 674 A1**
(43) Veröffentlichungstag der Anmeldung: **07.08.2013**
(21) Anmeldenummer: 12000733.1
(22) Anmeldetag: 03.02.2012
(51) Int. Cl.: E02B 17/02

(54) **Unterkonstruktion für eine Offshore-Plattform und Verfahren zum Installieren einer derartigen Unterkonstruktion**

(71) Anmelder: Nordic Yards Holding GmbH, 23966 Wismar (DE)
(72) Erfinder: Bollmohr, Thomas, 18147 Rostock (DE); Hagemeister, Constantin, 23966 Wismar (DE); Linnemann, Matthias, 23970 Wismar (DE); Mokros, Helge, 23966 Wismar (DE); Mönnig, Frank, 18233 Neubukow (DE)
(74) Vertreter: Hauck Patent- und Rechtsanwälte

(57) **Zusammenfassung**

Unterkonstruktion für eine Offshore-Plattform (1) umfassend
a. einen selbstschwimmenden unteren Baukörper (8) mit stabiler Schwimmlage,
b. mindestens einen Tank (18) im unteren Baukörper, der so dimensioniert ist, dass der untere Baukörper bei geflutetem Tank sinkt,
c. Mittel (19) zum Fluten mindestens eines Tanks und
d. Mittel zum Lagern (11,15,16) von Pfählen (4) in aufgerichteter Anordnung am unteren Baukörper.

## Beschreibung

Die Erfindung bezieht sich auf eine Unterkonstruktion für eine Offshore-Plattform und auf ein Verfahren zum Installieren einer Unterkonstruktion für eine Offshore-Plattform.

Offshore-Plattformen sind künstliche Standflächen im Meer, die meistens der Unterbringung von Technik und von Mannschaftsquartieren dienen. Die Erfindung bezieht sich insbesondere auf Offshore-Plattformen zum Sammeln von elektrischer Energie von Offshore-Windenergieanlagen und deren Weiterleitung zu einer Landstation im gleichgerichteten oder nicht gleichgerichteten Zustand. Derartige Offshore-Plattformen werden auch als Umspannplattformen bezeichnet. Die Erfindung ist auch auf andere Offshorebereiche anwendbar.

Bereits bekannt sind Offshore-Plattformen mit einer Unterkonstruktion aus einem Stahlrohrrahmen. Der Stahlrohrrahmen wird auf einer Barge (Lastkahn) mittels Schlepper zum Aufstellort geschleppt. Dort wird er mittels Schwimmkränen auf den Meeresgrund abgesenkt. Ferner werden mittels Schwimmkränen Pfähle in entsprechende Lager der Unterkonstruktion eingesetzt und in den Meeresboden eingerammt. Die Pfähle werden mit der Unterkonstruktion vergroutet.

Ferner wird auf einer Barge ein Plattform-Oberteil an den Aufstellort transportiert und werden mittels Schwimmkränen Beine in entsprechende Lager des Plattform-Oberteils eingesetzt. Die Beine werden mit ihrem unteren Enden in der Nähe des Meeresgrundes in die oberen Öffnungen der Pfähle eingesetzt und mit diesen vergroutet. Die Arbeiten unter Wasser müssen mittels Tauchrobotern oder von Tauchern kontrolliert und ausgeführt werden.

Bekannt ist auch schon der Einsatz selbstschwimmender Plattform-Oberteile, die mit eingesetzten Beinen zum Aufstellort geschleppt werden. Dort werden die Beine in der beschriebenen Weise mit den Pfählen verbunden.

Die Installation der bekannten Offshore-Plattformen ist aufwendig.

Davon ausgehend liegt der Erfindung die Aufgabe zu Grunde eine Unterkonstruktion für eine Offshore-Plattform und ein Verfahren geeignet zum Installieren einer Unterkonstruktion für eine Offshore-Plattform zur Verfügung zu stellen, welche den Aufwand für die Errichtung der Offshore-Plattform verringert.

Die Aufgabe wird durch eine Unterkonstruktion mit den Merkmalen von Anspruch 1 gelöst. Vorteilhafte Ausgestaltungen der Lösung sind in den Unteransprüchen angegeben.

Die erfindungsgemäße Unterkonstruktion für eine Offshore-Plattform umfasst
- einen selbstschwimmenden unteren Baukörper mit stabiler Schwimmlage,
- mindestens einen Tank im unteren Baukörper, der so dimensioniert ist, dass der untere Baukörper bei geflutetem Tank sinkt,
- Mittel zum Fluten mindestens eines Tanks und
- Mittel zum Lagern von Pfählen in aufgerichteter Anordnung am unteren Baukörper.

Die erfindungsgemäße Unterkonstruktion umfasst einen selbstschwimmenden unteren Baukörper mit stabiler Schwimmlage, der vorzugsweise in schiffbaulicher Ausführung aus Platten und Profilen hergestellt ist. Der untere Baukörper kann selbstschwimmend vom Ufer aus zum Aufstellort auf See verbracht werden. Hierfür können Schlepper eingesetzt werden. Es ist nicht erforderlich, den unteren Baukörper mit einem eigenen Antrieb zu versehen. Der Einsatz von Bargen für den Transport der Unterkonstruktion zum Aufstellort entfällt. Am Aufstellort kann die Unterkonstruktion durch Fluten des mindestens einen Tanks auf den Meeresgrund abgesenkt werden. Der Einsatz von Schiffskränen für das Abladen der Unterkonstruktion von einer Barge und Absenken der Unterkonstruktion im Wasser entfällt. Der Baukörper hat eine stabile Schwimmlage, d. h. er richtet sich aus seitlich geneigter Lage selbsttätig wieder auf, sofern die Neigung einen Maximalwert nicht übersteigt. Infolgedessen kann die Unterkonstruktion in eine definierte Ausgangslage gebracht werden, aus der sie durch Fluten des Tanks leicht in die gewünschte Lage am Meeresgrund abgesenkt werden kann. Durch die Mittel zum Lagern sind die Pfähle in aufgerichteter Anordnung bzw. aufgerichteten Lage am unteren Baukörper ausgerichtet, so dass die Unterkonstruktion als Schablone für das Einrammen der Pfähle in den Meeresgrund genutzt wird. Schwimmkräne sind hierfür grundsätzlich nicht erforderlich. Die aufgerichtete Anordnung der Pfähle am unteren Baukörper bezieht sich auf die stabile Schwimmlage des unteren Baukörpers. Der schwierige Einsatz von schwerer Technik wie Schwimmkränen unter Offshore-Bedingungen kann somit vermieden werden.

Die Mittel zum Lagern der Pfähle in aufgerichteter Anordnung sind so ausgebildet, dass sie die Pfähle in möglichst vertikaler Ausrichtung lagern. Vorzugsweise lagern die Mittel zum Lagern der Pfähle die Pfähle in vertikaler Ausrichtung, ggfs. mit Abweichungen (maximal 5°, vorzugsweise maximal 2°).

Gemäß einer vorteilhaften Ausgestaltung der Erfindung sind Pfähle in den Mitteln zum Lagern gelagert und ist die mit den Pfählen bestückte Unterkonstruktion selbstschwimmend mit stabiler Schwimmlage. Bei dieser Ausgestaltung dient die Unterkonstruktion als Transportmittel für die Pfähle, um die Unterkonstruktion gemeinsam mit den Pfählen zum Aufstellort zu verschwimmen. Ein gesonderter Transport der Pfähle zum Aufstellort auf See kann entfallen. Die Unterkonstruktion kann bereits in der Werft mit den Pfählen bestückt werden.

Stattdessen ist es möglich, die Unterkonstruktion erst am Aufstellort auf See mit den Pfählen zu bestücken. Dies kann vor dem Absenken der Unterkonstruktion geschehen, wodurch das Einfädeln der Pfähle in die Mittel zum Lagern gegenüber der herkömmlichen Vorgehensweise erleichtert wird, bei der die Pfähle am Meeresgrund eingefädelt werden.

Gemäß einer Ausgestaltung weist der untere Baukörper einen horizontalen Grundrahmen auf. Die horizontale Ausrichtung des Grundrahmens bezieht sich auf die stabile Schwimmlage des unteren Baukörpers. Der horizontale Grundrahmen besteht aus mehreren Rahmenteilen, die an Ecken des Grundrahmens miteinander verbunden sind. Bevorzugt sind die Rahmenteile geradlinig. Bevorzugt ist der Grundrahmen ein rechteckiger Rahmen. Der untere Baukörper wird mit dem Grundrahmen auf dem Meeresgrund abgesetzt. Der horizontale Grundrahmen bildet bei verhältnismäßig geringem baulichem Aufwand eine stabile Basis einer Offshore-Plattform.

Der untere Baukörper ist vorzugsweise als Auftriebskörper ausgestaltet. Hierfür ist er insgesamt hohl oder weist mehrere Hohlräume (Auftriebszellen) auf. Vorzugsweise ist der Hohlraum zugleich der Tank, der zum Absenken des Baukörpers geflutet werden kann. Gemäß einer anderen Ausgestaltung ist der untere Baukörper eine offene Rahmenkonstruktion, an der ein oder mehrere Tanks fixiert sind, die als Auftriebszellen dienen und zum Absenken der Unterkonstruktion geflutet werden können.

Gemäß einer weiteren Ausgestaltung umfasst der untere Baukörper mehrere Tanks, die in einer horizontalen Ebene seitlich zueinander versetzt angeordnet sind und sind die Mittel zum Fluten so ausgebildet, dass die verschiedenen Tanks gezielt in unterschiedlichem Ausmaß flutbar sind. Dies ermöglicht, die Unterkonstruktion beim Absenken zu trimmen. Falls die Unterkonstruktion auf einer Seite schneller absinkt, kann dies durch reduziertes Fluten eines Tanks auf derselben Seite beziehungsweise stärkeres Fluten eines Tanks auf der gegenüberliegenden Seite des unteren Baukörpers kompensiert werden. Auch ermöglicht dies, die Unterkonstruktion zuerst auf lokalen Erhebungen des Meeresgrundes abzusetzen, um diese abzuflachen und die Unterkonstruktion auf dem abgeflachten Meeresgrund im Wesentlichen horizontal abzusetzen. Beim Absenken kann die Unterkonstruktion aus der stabilen Schwimmlage in einen indifferenten oder annähernd indifferenten Zustand gelangen. Durch gezieltes Fluten der verschiedenen Tanks ist die Unterkonstruktion dennoch in der gewünschten Ausrichtung absenkbar.

Gemäß einer Ausgestaltung umfassen die Mittel zum Lagern der Pfähle die Pfähle seitlich. Infolgedessen sind die Pfähle beim Einrammen in den Meeresuntergrund von der Unterkonstruktion umschlossen. Hierdurch findet eine Trennung zwischen dem umgebenden Seewasser und den Pfählen statt. Infolgedessen kann mit einer Schallreduzierung gerechnet werden.

Gemäß einer Ausgestaltung weisen die Mittel zum Lagern der Pfähle vom unteren Baukörper hochstehende Türme mit jeweils einer oberen und einer unteren Öffnung, einem Durchgang zwischen oberer und unterer Öffnung und einem oberen und einem unteren Lager für einen Pfahl auf. Der Pfahl ist durch die obere Öffnung in den Durchgang einsetzbar und durch die untere Öffnung absenkbar. Hierdurch werden mit verhältnismäßig geringem baulichem Aufwand stabile Mittel zum Lagern von Pfählen in vertikaler Ausrichtung verwirklicht.

Gemäß einer vorteilhaften Ausgestaltung weisen die Türme jeweils einen weiteren Tank auf. Wenn der weitere Tank nicht mit Wasser gefüllt ist, wirkt der weitere Tank als weitere Auftriebszelle. Dies ist vorteilhaft beim Absenken durch Fluten der Tanks in den übrigen Teilen des unteren Baukörpers.

Durch die weiteren Tanks in den Türmen kann insbesondere ein indifferenter Zustand des Baukörpers vermieden werden, der ansonsten beim Eintauchen der übrigen Teile des Baukörpers in das Wasser eintreten könnte.

Die Türme können als offene Rahmenkonstruktion ausgebildet sein. Daran können die weiteren Tanks befestigt sein. Gemäß einer bevorzugten Ausgestaltung haben die Türme geschlossene Seitenwände, eine geschlossene Bodenwand mit der unteren Öffnung des unteren Lagers darin, eine Druckdichtung im unteren Lager und ist im Turm um einen darin gelagerten Pfahl herum ein Hohlraum vorhanden. Aufgrund dieser Ausgestaltung kann durch die untere Öffnung kein Wasser in den Hohlraum des Turms eindringen. Der Hohlraum bildet den weiteren Tank.

Gemäß einer Ausgestaltung weist die Unterkonstruktion Mittel zum Lenzen des mindestens einen Tanks auf. Mittels der Mittel zum Lenzen kann in die Tanks eindringendes Wasser gelenzt werden, bevor die Unterkonstruktion gezielt abgesenkt wird. Ferner kann mittels der Mittel zum Lenzen beim Absenken der Unterkonstruktion oder vor einer Inspektion Wasser aus den Tanks der Türme gelenzt werden.

Gemäß einer weiteren Ausgestaltung sind die Türme an den Ecken des Grundrahmens angeordnet. Hierbei sind die Abstände zwischen Türmen und die Stabilität der Unterkonstruktion maximal. Ferner können die Türme benachbarte Rahmenelemente miteinander verbinden.

Vorzugsweise hat die Unterkonstruktion drei, vier oder mehr Türme. Alternativ hat die Unterkonstruktion nur einen einzigen Turm, der z.B. zentral bezüglich des Grundrahmens angeordnet ist.

Gemäß der Ausgestaltung weist die Unterkonstruktion Mittel zum Fixieren der Pfähle in den Mitteln zum Lagern der Pfähle und/oder Mittel zum Bremsen einer Absenkbewegung der Pfähle bezüglich des unteren Baukörpers auf. Mittels der Mittel zum Fixieren sind die Pfähle beim Verschwimmen zum Aufstellort in den Mitteln zum Lagern fixierbar. Vorzugsweise werden die Pfähle in einer Position in den Mitteln zum Lagern fixiert, in der sie nicht von der Unterseite des unteren Baukörpers vorstehen. Hierdurch ist es möglich, den unteren Baukörper am Aufstellort ohne vorheriges Anheben der Pfähle so abzusenken, dass er mit seiner Unterseite auf dem Meeresgrund aufsitzt. Ein Eindringen der Pfähle in den Meeresuntergrund vor dem Aufsitzen des unteren Baukörpers auf dem Meeresuntergrund wird so vermieden. Ein vorheriges Eindringen der Pfähle in den Meeresuntergrund wäre mit dem Risiko einer Fehlausrichtung der Pfähle verbunden, die ein vollständiges Absenken der Unterkonstruktion auf den Meeresgrund verhindern könnte. Mittels der Mittel zum Bremsen einer Absenkbewegung der Pfähle kann die Absenkbewegung verlangsamt werden. Dies ist vorteilhaft für ein kontrolliertes und gleichmäßiges Verankern der Pfähle im Meeresgrund.

Die Mittel zum Fixieren und die Mittel zum Bremsen sind gemäß einer weiteren Ausgestaltung Klemmvorrichtungen, die am Baukörper befestigt sind und auf die Pfähle einwirken. Gemäß einer weiteren Ausgestaltung sind die Klemmvorrichtungen in die Mittel zum Lagern integriert. Vorzugsweise sind sie in die Türme integriert. Gemäß einer weiteren Ausgestaltung greifen die Klemmvorrichtungen zwischen den oberen und unteren Lagern der Mittel zum Lagern an den Pfählen an. Gemäß einer weiteren Ausgestaltung haben die Klemmvorrichtungen Klemmbacken, die um die Pfähle zusammengespannt werden können.

Bei einer weiteren Ausgestaltung sind Mittel zum Verbinden mit den Beinen einer Plattform vorhanden. Die Mittel zum Verbinden mit den Beinen einer Plattform sind vorzugsweise am oberen Ende der Pfähle vorhanden. Gemäß einer weiteren Ausgestaltung sind die Mittel zum Verbinden rohrförmige Enden der Pfähle, in die unteren Enden von Beinen einer Plattform einsetzbar sind. Gemäß einer weiteren Ausgestaltung sind die Mittel zum Verbinden zusätzlicher Verbindungseinheiten (englisch: *leg mating units*), die unten an die oberen Enden der Pfähle angebaut sind und oben an die unteren Enden der Beine anbaubar sind. Gemäß einer anderen Ausgestaltung sind die Mittel zum Verbinden mit den Beinen einer Plattform an den oberen Enden der Türme vorhanden.

Gemäß einer bevorzugten Ausgestaltung ist die Unterkonstruktion so ausgebildet, dass die Türme am Aufstellort bei einem bestimmten Wasserstand gemäß Wasserstandsanalyse mit ihren oberen Enden aus der Wasseroberfläche heraus ragen oder im Nahbereich unter der Wasseroberfläche angeordnet sind und/oder mittels der Pfähle bei dem besagten Wasserstand im Meeresgrund eine Pfahlgründung herstellbar ist und die Pfähle mit ihren oberen Enden über die Wasseroberfläche hinaus ragen oder im Nahbereich unter der Wasseroberfläche angeordnet sind. Diese Ausgestaltung hat den Vorteil, dass eine Schnittstelle für die zu installierende Plattform bei dem bestimmten Wasserstand über der Wasseroberfläche oder im Nahbereich unter der Wasseroberfläche angeordnet ist. Die Verbindung der Beine der Plattform mit der Unterkonstruktion kann infolgedessen im Sichtbereich und unter besonders günstigen Bedingungen erfolgen. Tauchroboter oder Taucher sind hierfür nicht erforderlich. Die Arbeiten können von Arbeitsflößen aus vorgenommen werden, die neben den oberen Enden der Türme und/oder der Pfähle positioniert werden.

Vorzugsweise ragen die Türme und/oder Pfähle um maximal 6 Meter aus der Wasseroberfläche heraus, weiterhin vorzugsweise um maximal 3 Meter, weiterhin vorzugsweise um maximal 1,5 Meter.

Vorzugsweise sind unter der Wasseroberfläche angeordnete Verbindungsstellen im Sichtbereich unter der Wasseroberfläche angeordnet. Der Sichtbereich ist der von einem normalsichtigen erwachsenen Menschen mit unbewaffnetem Auge einsehbare Bereich unter der Wasserlinie. Im Falle einer Schnittstelle unter der Wasserlinie kann durch geeignete Maßnahmen der Sichtbereich erweitert werden.

Dies erfolgt durch an der Unterkonstruktion angebrachte Elemente, die oberhalb der Wasserlinie sichtbar sind und die Position der Schnittstelle bestimmbar gestalten. Die Ausgestaltung kann z.B. mit Markierungen in Form von Stangen oder Rohren erfolgen, die von der Unterkonstruktion bis über die Wasserlinie hoch geführt werden und die Position der Schnittstelle bestimmen.

Vorzugsweise haben die unter der Wasseroberfläche angeordneten Verbindungsstellen maximal einen Abstand von 6 Metern von der Wasseroberfläche, weiterhin vorzugsweise von maximal 3 Metern von der Wasseroberfläche, weiterhin vorzugsweise von maximal 1,5 Metern der Wasseroberfläche.

Der bestimmte Wasserstand gemäß Wasserstandsanalyse ist vorzugsweise der Wasserstand MW (Mittelwasser) oder LAT (*lowest astronomical tide*) auch bezeichnet als NGzW (niedrigster Gezeitenwasserstand) oder HAT (*highest astronomical tide*) auch bezeichnet als HGzW (höchster Gezeitenwasserstand) oder ein anderer definierter Wasserstand aus der Gezeitenkunde. Je nach Zeitfenster, das für die Verbindung von Unterkonstruktion und Plattform benötigt wird, kann ein geeigneter Wasserstand ausgewählt werden, der der Dimensionierung der Unterkonstruktion zugrunde gelegt wird. Die Wasserstandsanalyse liefert für vorgegebene Installationszeiten die jeweiligen Wasserstände.

Gemäß einer Ausgestaltung weist die Unterkonstruktion einen vom Baukörper hochstehenden Kabelturm auf. Der Kabelturm dient dazu, Seekabel vom Meeresgrund zur Plattform hoch zu führen beziehungsweise von der Plattform zum Meeresgrund herunter zu führen und zu schützen.

Bei einer weiteren Ausgestaltung umfasst der Kabelturm ein Bündel aus Einzelrohren. Die Einzelrohre können als Kabelschutzrohre (*J-tubes*) für die Seekabel dienen und die erforderliche Stabilität des Kabelturmes sicher stellen.

Gemäß einer weiteren Ausgestaltung ist der Kabelturm außerhalb des Baukörpers angeordnet und seitlich mit ihm verbunden. Infolgedessen wird das Heranführen von Seekabeln an den Kabelturm durch den Baukörper nicht behindert.

Gemäß einer weiteren Ausgestaltung weist der Baukörper in der Nähe des Kabelturms einen Auftriebskörper für den Trimmausgleich auf. Der Auftriebskörper kompensiert das Gewicht des Kabelturms beim Verschwimmen der Unterkonstruktion.

Gemäß einer Ausgestaltung weist die Unterkonstruktion auf mindestens einem Turm einen Steuerstand auf, von dem aus die Mittel zum Fluten steuerbar sind. Gemäß einer weiteren Ausgestaltung weist der untere Baukörper Messeinrichtungen zum Erfassen der Trimmlage des unteren Baukörpers auf und der Steuerstand Mittel zum Anzeigen der erfassten Trimmlage auf.

Gemäß einer Ausgestaltung weist die Unterkonstruktion Mittel zum Fernsteuern der Mittel zum Fluten mittels einer von den Mitteln zum Fluten entfernten Fernsteuerung auf und/oder weist sie Messeinrichtungen zum Erfassen der Trimmlage des Baukörpers Mittel zum Übertragen der Messergebnisse an eine von den Messeinrichtungen entfernten Anzeigeeinrichtung auf. Hierdurch ist es möglich, sicher das Absenken der Unterkonstruktion zu steuern und die jeweilige Ausrichtung der Unterkonstruktion beim Absenken zu überwachen. Die Mittel zum Fernsteuern und/oder die Mittel zum Übertragen sind drahtgebundene und/oder drahtlose Mittel zum Fernsteuern und/oder zum Übertragen. Die Fernsteuerung und/oder die Mittel zum Anzeigen können auf den Steuerstand oder an einem externen Standort angeordnet sein. Dieser befindet sich beispielsweise auf einem Begleitschiff.

Gemäß einer weiteren Ausgestaltung sind Mittel zum formschlüssigen Verbinden der Pfähle mit den Mitteln zum Lagern und/oder Mittel zum formschlüssigen Verbinden der Pfähle mit den Beinen einer Plattform vorhanden. Die Mittel zum formschlüssigen Verbinden sind gemäß einer weiteren Ausgestaltung Groutverbindungen. Hierbei handelt es sich um flüssigen Beton, Kunstharz oder eine andere aushärtende, verpressbare Masse. Diese wird in den Fügebereich der Pfähle und der Mittel zum Lagern und/oder der Pfähle und der Beine eingebracht wird, um diese nach dem Aushärten formschlüssig miteinander zu verbinden. Zusätzlich oder stattdessen kann eine formschlüssige Verbindung durch Verschweißen und/oder durch Verschrauben erfolgen.

Ferner wird die Aufgabe durch ein Verfahren mit dem Merkmal von Anspruch 11 gelöst. Vorteilhafte Ausgestaltungen des Verfahrens sind in Unteransprüchen angegeben.

Das erfindungsgemäße Verfahren geeignet zum Installieren einer Unterkonstruktion für eine Offshore-Plattform gemäß einem der Ansprüche 1 bis 10 umfasst folgende Schritte:
- die Unterkonstruktion wird gebaut,
- die Unterkonstruktion wird selbstschwimmend zum Aufstellort auf See verbracht,
- die Unterkonstruktion wird geflutet und auf den Meeresgrund abgesenkt und
- die Unterkonstruktion wird mittels Pfählen am Meeresgrund verankert.

Die Vorteile dieser Verfahrensweise sind vorstehend unter Bezug auf die Unterkonstruktion von Anspruch 1 erläutert. Die Vorteile der nachfolgenden Ausgestaltungen des Verfahrens sind vorstehend unter Bezug auf Ausgestaltungen der Unterkonstruktion erläutert.

Gemäß einer Ausgestaltung des Verfahrens wird die Unterkonstruktion vor dem Verbringen zum Aufstellort mit Pfählen bestückt und selbstschwimmend mit den Pfählen zum Aufstellort verbracht.

Gemäß einer weiteren Ausgestaltung erfolgt eine Ausrichtung der Unterkonstruktion beim Absenken durch gezieltes Steuern der beim Fluten in die verschiedenen Tanks einströmenden Wassermengen.

Gemäß einer weiteren Ausgestaltung wird die Unterkonstruktion beim Absinken mittels Pontons und darauf angeordneten Seilwinden stabilisiert. Vorzugsweise wird die Unterkonstruktion zwischen zwei benachbarten Pontons kontrolliert abgefiert.

Gemäß einer weiteren Ausgestaltung wird die Unterkonstruktion zuerst auf lokalen Erhebungen des Meeresgrundes abgesetzt. Hierdurch können Unebenheiten abgeflacht werden.

Gemäß einer weiteren Ausgestaltung werden die Pfähle nach dem Absetzen der Unterkonstruktion auf den Meeresgrund durch Schwerkraft und/oder durch Einrammen in den Meeresgrund eingetrieben.

Gemäß einer weiteren Ausgestaltung wird das Herablassen der Pfähle durch Abbremsen gesteuert.

Gemäß einer weiteren Ausgestaltung werden die Unterkonstruktion und die Pfähle so auf dem Meeresgrund installiert, dass die oberen Enden der Pfähle und/oder der Türme über die Wasseroberfläche hinaus stehen und/oder im Nahbereich unter der Wasseroberfläche angeordnet sind.

Gemäß einer weiteren Ausgestaltung werden die Pfähle nach dem Eintreiben in den Meeresgrund formschlüssig mit der Unterkonstruktion verbunden.

In dieser Patentanmeldung beziehen sich die Angaben "oben" und "unten" auf die Anordnung der Offshore-Plattform mit der Unterkonstruktion unterhalb der Plattform mit aufgerichteten Pfählen und aufgerichteten Beinen.

Die Erfindung wird nachfolgend anhand der anliegenden Zeichnungen eines Ausführungsbeispiels näher erläutert.

In den Zeichnungen zeigen:
Fig. 1 Eine Offshore-Plattform bestehend aus Unterkonstruktion und ein Plattform-Oberteil in einer Perspektivansicht schräg von oben und von der Seite;
Fig. 2 Unterkonstruktion der Offshore-Plattform mit abgesenkten Pfählen in einer Perspektivansicht schräg von oben und von der Seite;
Fig. 3 die Unterkonstruktion in demselbem Zustand in einer Seitenansicht;
Fig. 4 die Unterkonstruktion in einer Draufsicht;
Fig. 5 einen Turm der Unterkonstruktion mit eingesetztem Pfahl in einem Horizontalschnitt;
Fig. 6 den Turm mit eingesetztem Pfahl in einem Vertikalschnitt;

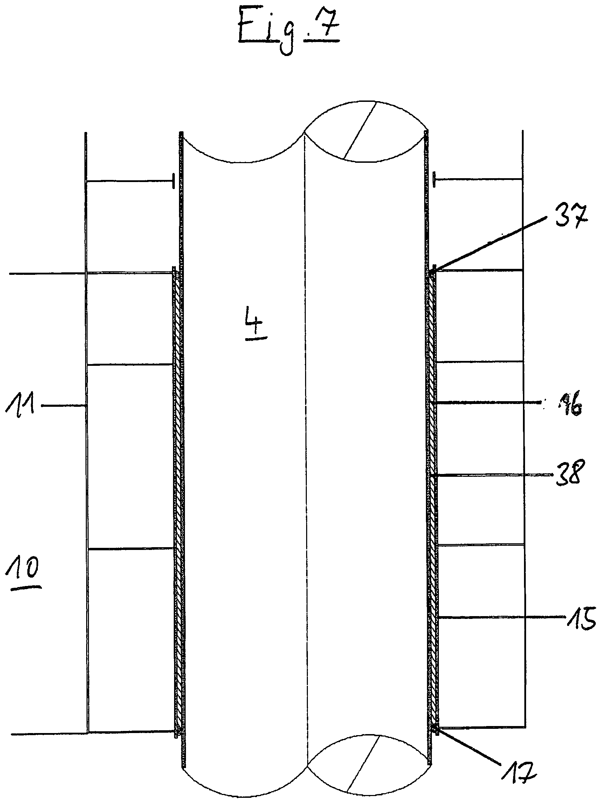

Fig. 7 unteres Lager des Turms mit eingesetztem Pfahl im Vertikalschnitt;
Fig. 8 Klemmvorrichtung des Turms mit eingesetztem Pfahl im Vertikalschnitt;
Fig. 9 die Unterkonstruktion mit Pfählen in angehobener Ausgangsstellung im Schwimmzustand in einem Vertikalschnitt;
Fig. 10 die abgesenkte Unterkonstruktion mit in den Meeresgrund gerammten Pfählen in einem Vertikalschnitt;
Fig. 11 das Plattform-Oberteil in angehobenen Zustand auf den Beinen in einer Perspektivansicht schräg von oben und von der Seite;
Fig. 12 das Plattform-Oberteil in derselben Position auf den Beinen in einer Seitenansicht;
Fig. 13 das Plattform-Oberteil mit den Beinen in angehobener Ausgangsstellung in Schwimmlage in einem Vertikalschnitt;
Fig. 14eine Hubvorrichtung zum Verlagern der Beine bezüglich des Plattform-Oberteils in einer bestimmten Position des Beines in einer Seitenansicht;
Fig. 15 dieselbe Hubvorrichtung in einer bezüglich Fig. 10 tieferen Position des Beines in Seitenansicht;
Fig. 16 Schnittstelle zwischen einem Pfahl und einem Bein vor dem Herstellen der Verbindung in Seitenansicht;
Fig. 17 dieselbe Schnittstelle nach dem Herstellen der Verbindung in Seitenansicht;
Fig. 18 dieselbe Schnittstelle nach dem Herstellen der Verbindung in einem Vertikalschnitt;

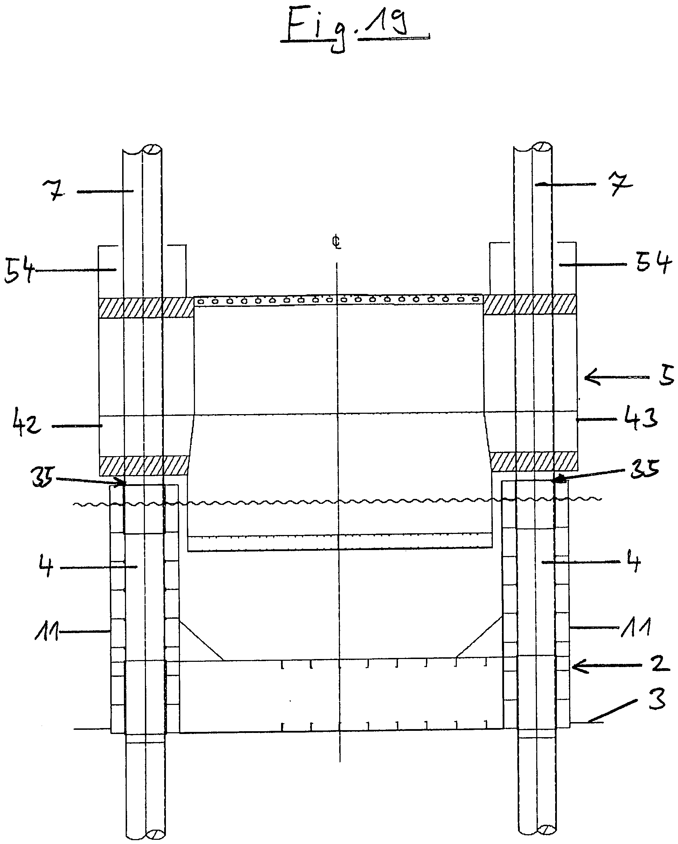

Fig. 19 dasselbe Plattform-Oberteil beim Verbinden der Beine mit den Pfählen der Unterkonstruktion in einem Vertikalschnitt;
Fig. 20 die Offshore-Plattform nach dem Anheben des Plattform-Oberteils bezüglich der Beine in einem Vertikalschnitt.

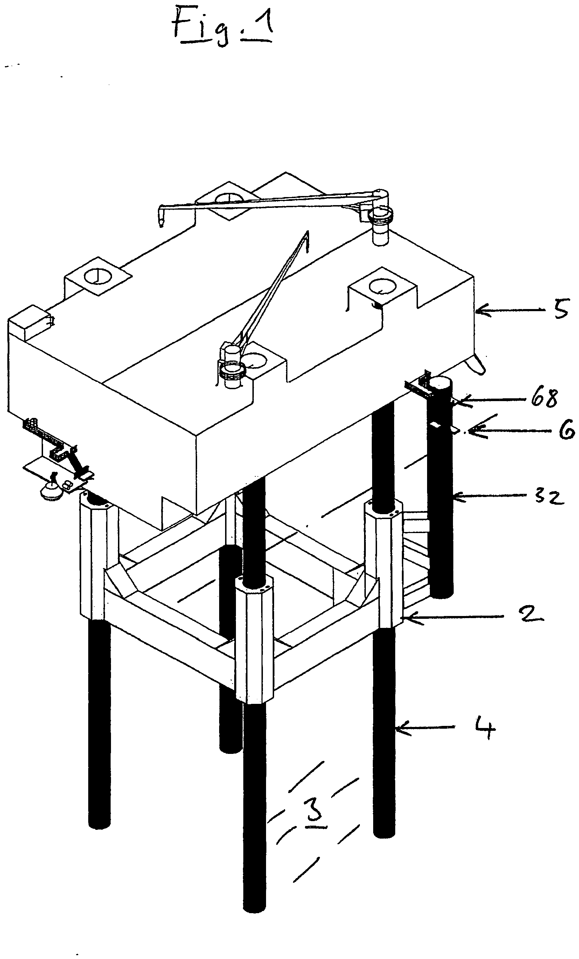

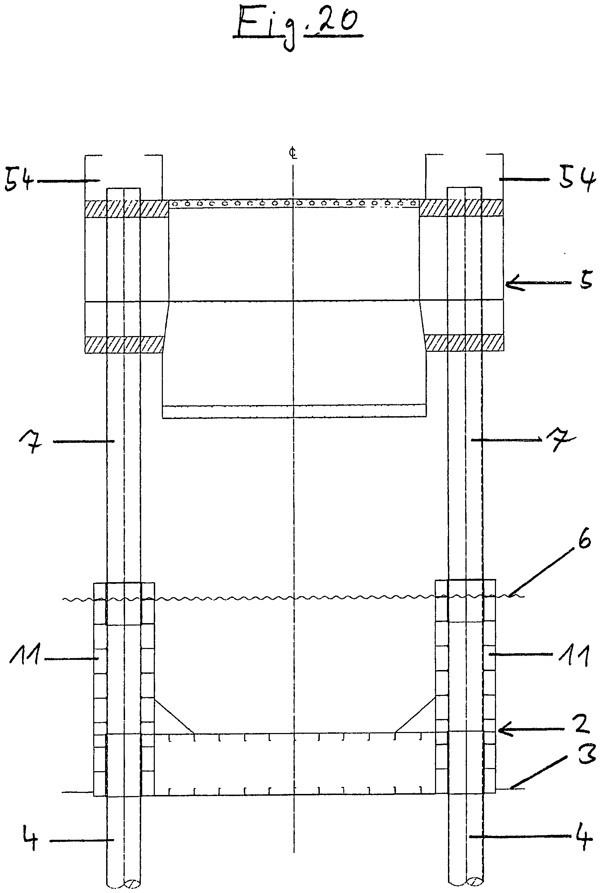

Gemäß Fig. 1 und 20 umfasst eine Offshore-Plattform 1 eine Unterkonstruktion 2 (englisch: *base frame*), die auf den Meeresgrund 3 abgesetzt ist. Die Unterkonstruktion 2 bildet mit Pfählen 4 die Gründungsstruktur der Offshore-Plattform 1. Die Pfähle 4 (englisch: *pile*), auch "Nägel" genannt, werden in den Meeresgrund 3 eingerammt, um eine Pfahlgründung herzustellen und die Unterkonstruktion 2 am Meeresgrund 3 zu verankern. Die Pfähle 4 dienen der Abtragung von Lasten aus einem Plattform-Oberteil 5 (englisch: *topside*). Die Pfähle 4 sind vorzugsweise kreiszylindrisch. Vorzugsweise sind sie hohlzylindrisch.

Das Plattform-Oberteil 5 ist eine Tragstruktur, die im Bereich oberhalb der Wasseroberfläche 6 und außerhalb des Einflussbereiches von Seegang angeordnet ist.

Das Plattform-Oberteil 5 ist über Beine 7 (englisch: *leg*) an der Gründungsstruktur abgestützt. Die Beine 7 sind oben jeweils in die Struktur des Plattform-Oberteils 5 eingebunden und unten mit einem Pfahl 4 verbunden. Die Beine 7 sind vorzugsweise kreiszylindrisch. Vorzugsweise sind sie hohlzylindrisch.

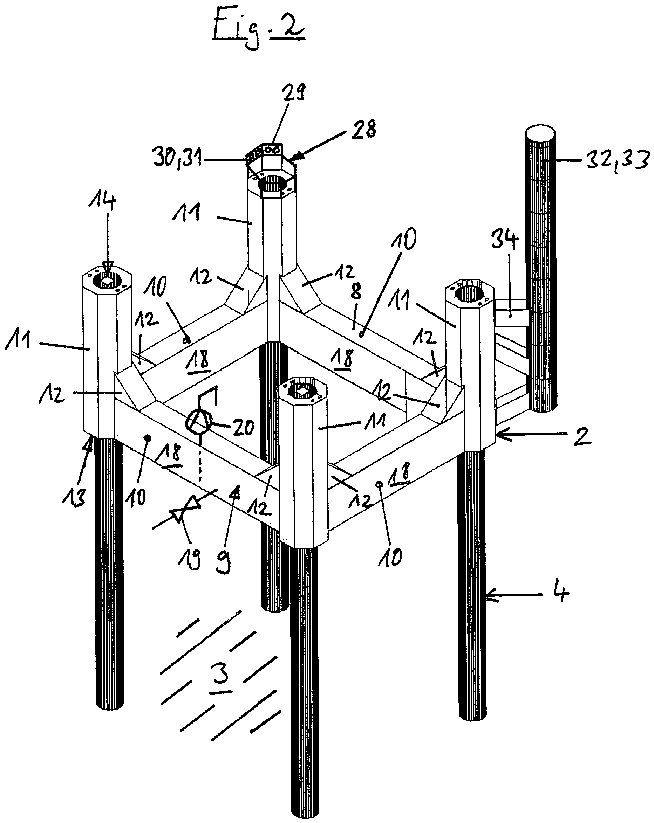

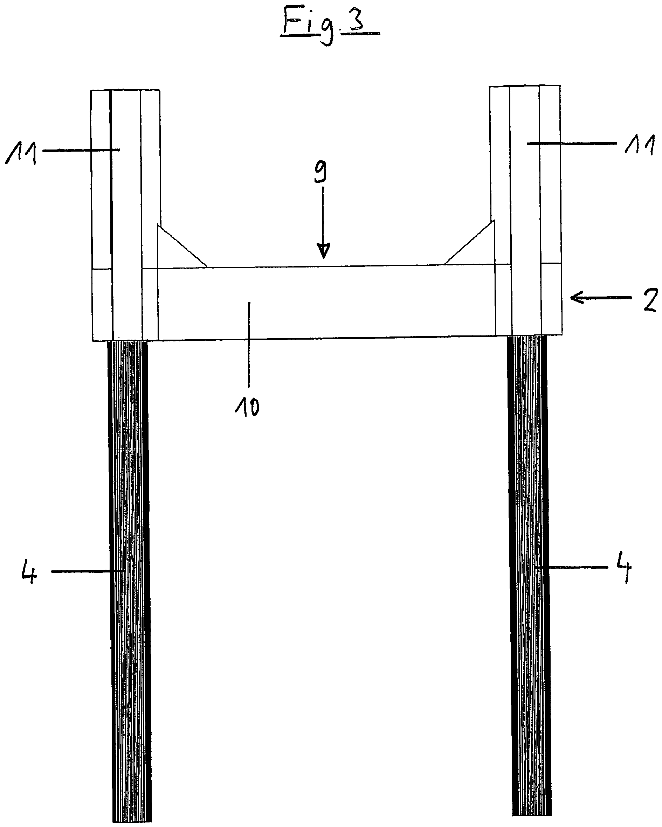

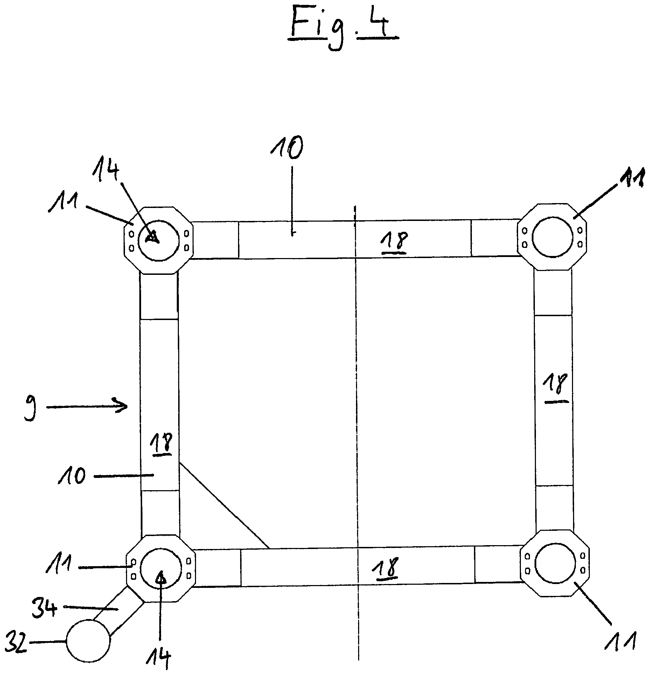

Gemäß Fig. 2 bis 4 weist die Unterkonstruktion 2 einen Baukörper 8 auf, der einen horizontalen, rechteckigen Grundrahmen 9 umfasst. Der Grundrahmen 9 hat vier geradlinige Rahmenteile 10.

Vom Rahmen 9 stehen vier Türme 11 nach oben vor. Die Türme 11 schließen unten bündig mit der Unterseite des Grundrahmens 9 ab. Die Türme 11 sind Hohlkörper.

Im Beispiel haben sie einen achteckigen Querschnitt. Jeder Turm 11 befindet sich an einer Ecke des Grundrahmens 9 und bildet zugleich ein Verbindungselement zwischen zwei benachbarten Rahmenteilen 10. Die Rahmenteile 10 tragen oben jeweils an den Enden Stützelemente 12, welche die Türme 11 seitlich abstützen.

Die hohlzylindrischen Türme 11 haben am unteren Ende jeweils eine kreisförmige, untere Öffnung 13 und am oberen Ende eine kreisförmige obere Öffnung 14 für den Durchtritt eines Pfahls 4.

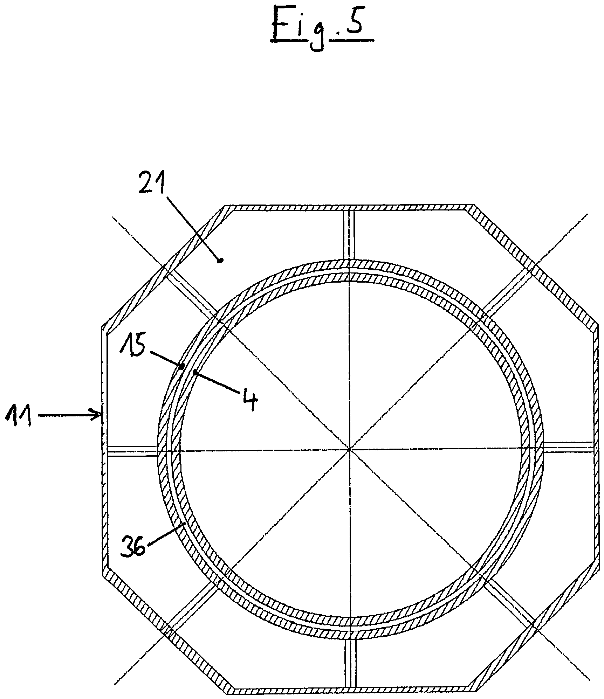

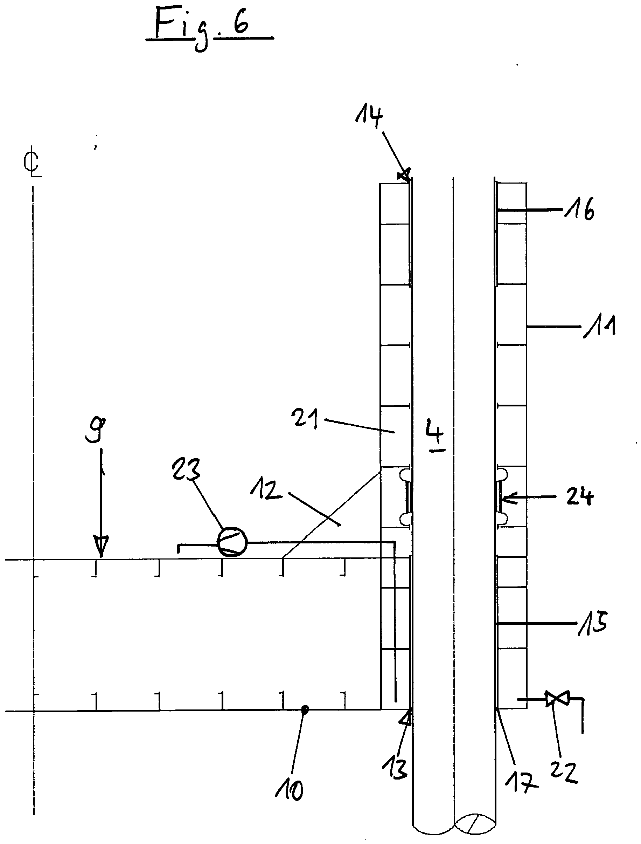

Gemäß Fig. 5 und 6 umfasst jeder Turm 11 ein an die untere Öffnung 13 anschließendes hülsenförmiges unteres Lager 15 und ein an die obere Öffnung 14 anschließendes, hülsenförmiges oberes Lager 16. Im unteren Lager 15 ist eine Druckdichtung 17 zum Abdichten des unteren Lagers 16 gegenüber dem Pfahl 4 vorhanden.

Der untere Baukörper 8 aus Grundrahmen 9 und Türmen 11 ist eine schiffbauliche Stahlkonstruktion aus Platten und Profilen. Die Platten und Profile sind miteinander verschweißt.

Im Inneren des unteren Baukörpers 8 sind mehrere separate Tanks 18 vorhanden. Im Beispiel in jedem Rahmenteil 8 ist ein separater Tank 18 angeordnet. Die Tanks 18 sind jeweils mit Mitteln zum Fluten 19 und Mitteln zum Lenzen 20 verbunden, über die jeder Tank gesondert geflutet und gelenzt werden kann. Bei dem Mittel zum Fluten 19 handelt es sich um geeignete Ventile. Die Mittel zum Lenzen 20 sind entfernbare Pumpen mit zugehörigen Leitungen.

Gemäß Fig. 5 und 6 ist in jedem Turm 11 um den Pfahl 4 herum ein seitlich und unten abgedichteter Hohlraum vorhanden, wenn der Pfahl 4 in dem unteren und oberen Lager 15, 16 gehalten ist. Der Hohlraum bildet einen weiteren Tank 21. Dieser ist wiederum über gesonderte weitere Mittel zum Fluten 22 in Form von Ventilen und weitere Mittel zum Lenzen 23 in Form von Pumpen und zugehörigen Leitungen gesondert flutbar und lenzbar.

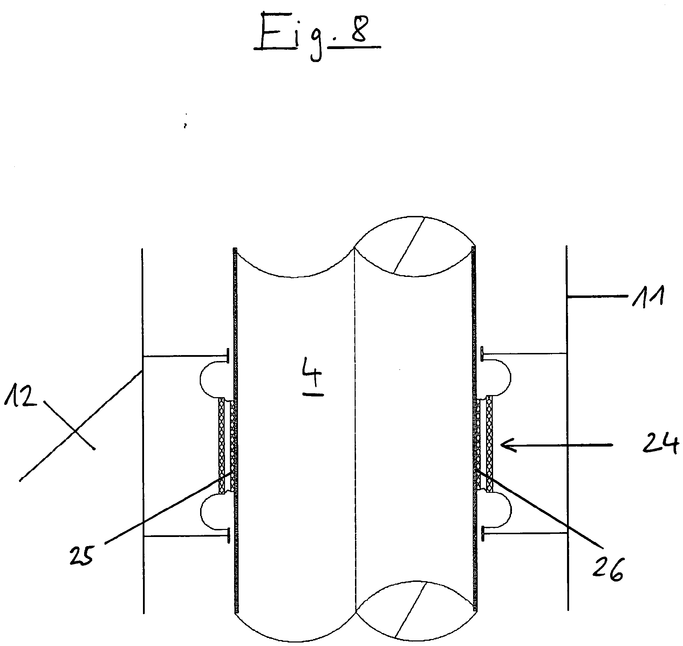

Ferner sind gemäß Fig. 6 und 8 in jedem Turm Mittel zum Fixieren und Bremsen 24 eines Pfahls 4 in einer vertikalen Position vorhanden. Hierbei kann es sich um eine mechanische oder hydraulische Einrichtung handeln, die kraftschlüssig oder formschlüssig die Pfähle in Position hält. Gemäß Fig. 8 handelt es sich um Klemmbacken 25, 26, die auf einem horizontalen Lager 27 ruhen und einen Pfahl 4 auf verschiedenen Seiten umschließen. Durch Zusammenziehen der Klemmbacken 25, 26 ist der Pfahl 4 fixierbar, so dass er sich nicht auf Grund seines Eigengewichtes bezüglich des Turms nach unten verlagert. Durch lösen der Bremseinrichtung können die Pfähle 4 kontrolliert abgelassen werden.

Die Tanks 18, 21 sind so dimensioniert, dass sie im leeren Zustand den Auftrieb für das Verschwimmen der Unterkonstruktion 2 inklusive der Pfähle 4 gewährleisten. Die Unterkonstruktion 2 ist selbstschwimmend und hat eine stabile Schwimmlage. Sie weist keinen eigenen Antrieb auf.

Gemäß Fig. 2 ist auf mindestens einem Turm 11 oben ein Steuerstand 28 vorhanden. Die Mittel zum Fluten 19 sind mit Mitteln zum Steuern 29 der Mittel zum Fluten im Steuerstand 28 verbunden.

Ferner sind in dem Steuerstand Mess- und Anzeigeeinrichtungen 30, 31 zum Erfassen und Anzeigen der Trimmlage des Baukörpers 8 vorhanden.

Zudem umfasst die Unterkonstruktion einen vertikalen Kabelturm 32, der aus einem Bündel von Einzelrohren 33 gebildet ist. Der Kabelturm 32 ist außerhalb des Rahmens 9 angeordnet. Er ist über Streben 34 seitlich mit einem Turm 11 verbunden.

Zur Kompensation des Gewichts des Kabelturms 32 ist der Grundrahmen 9 in der benachbarten Ecke mit einem prismenförmigen Auftriebskörper 35 versehen. Der Auftriebskörper 35 stabilisiert zugleich den Grundrahmen 9.

Die Höhe der Türme 11 ist auf den Wasserstand zum Aufstellort abgestimmt, so dass die oberen Enden der Türme 11 zur Zeit der Installation der Offshore-Plattform 1 aus dem Wasser heraus ragen.

Bei einem Beispiel beträgt die Länge des Rahmens 47,5 Meter und seine Breite auf dem Hauptdeck 41,5 Meter. Die Unterkonstruktion ist für einen Aufstellort mit einer Wassertiefe (*lowest astronomical tide,* LAT) von 24 Metern konzipiert. Die Höhe der Türme 11 beträgt 25,5 Meter, so dass die Türme 11 am Aufstellort zu bestimmten Zeitpunkten bei normalen Seegangsverhältnissen, zum Beispiel bei mäßig bewegter See (Seegangsstärke 4), aus dem Wasser heraus stehen.

Der Kabelturm 32 ist so bemessen, dass er bis zur Plattform 5 empor ragt. Im Beispiel beträgt seine Länge 40 Meter.

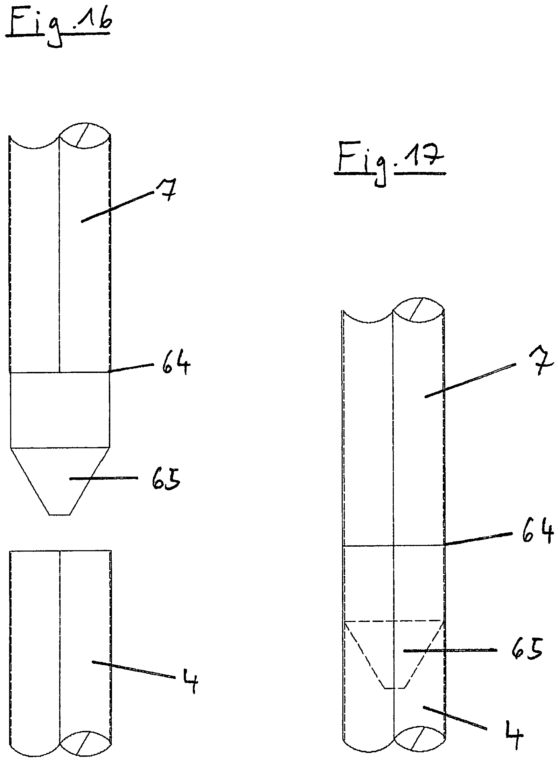

Die Pfähle 4 sind hohlzylindrisch. Unten sind sie vorzugsweise während des Transports geschlossen und werden zum Rammen unten geöffnet. Gemäß Fig. 16 bis 18 haben die Pfähle 4 oben eine Öffnung 35, in die ein Bein 5 einführbar ist.

Die Unterkonstruktion 2 wird in einem Baudock einer Werft hergestellt.

Während der Bauphase werden die Ausrüstung einschließlich der Mittel zum Fluten und zum Lenzen (19, 20, 21, 22) und optional die Pfähle 4 in der Unterkonstruktion 2 installiert. Die Pfähle 4 können im Baudock mittels eines (Portal-)Kranes leicht in die unteren und oberen Lager 15, 16 der Türme 11 eingesetzt und darin in einer Ausgangsstellung mittels der Klemmbacken 25, 26 fixiert werden, in der sie unten nicht vom Grundrahmen 9 vorstehen.

Optional wird der Kabelturm 32 in dem Baudock angebaut.

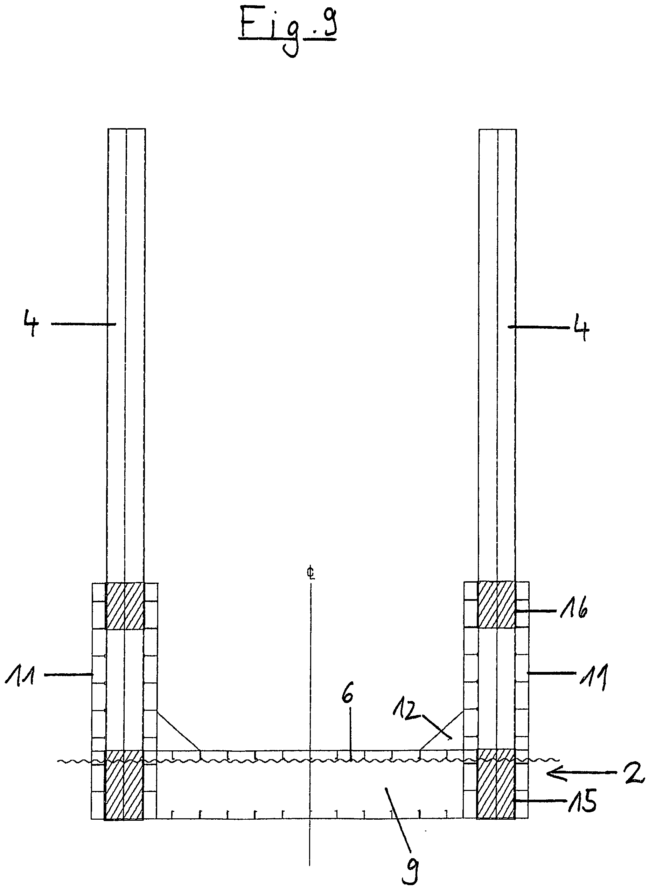

Nach vollständiger Montage aller Komponenten wird die Unterkonstruktion 2 im Baudock aufgeschwommen und an die Ausrüstungspier zur Endausrüstung und Erprobung verholt. Nach baulicher Freigabe erfolgt der Transit der Unterkonstruktion 2 zum Installationsort im Schleppverband, mit entsprechender temporärer Befeuerung. Der Schwimmzustand ist in Fig. 9 gezeigt.

Gegebenenfalls wird der Meeresgrund 3 vor dem Aufstellen der Unterkonstruktion 2 vorbereitet, wenn er zu große Unregelmäßigkeiten aufweist. Hierfür wird auf dem Meeresgrund 3 eine ebene Fläche geschaffen, welche den definierten Tolleranzen für die Installation der Offshore-Plattform 2 genügt und einen geeigneten Untergrund für die Unterkonstruktion 2 bildet.

Die Unterkonstruktion 2 wird von Seeschleppern über den Aufstellort positioniert. Am Aufstellort können die Schlepper mittels eines dynamischen Positioniersystems automatisch auf einer vorgegebenen Position gehalten werden. Zum Einsatz kommen kann beispielsweise das DP2-System.

Das Fluten der Tanks 18, 21 erfolgt manuell über den Steuerstand 28 der Unterkonstruktion nach Maßgabe der von der Anzeigeeinrichtung 31 angezeigten Trimmlage.

Bei Bedarf können die Tanks 18, 21 ferngesteuert geflutet werden. Die Trimmlage wird durch die Messeinrichtungen 30 auf der Unterkonstruktion 2 überwacht und gegebenenfalls werden die Messergebnisse an einen Ort außerhalb der Unterkonstruktion 2 übertragen, von dem aus das Fluten ferngesteuert wird.

Nachdem die Unterkonstruktion 2 auf dem Meeresgrund aufsitzt, werden die Pfähle 4 unter Nutzung der Schwerkraft herabgelassen. Die Klemmbacken 25, 26 werden hierfür vom Steuerstand 28 aus gesteuert. Gegebenenfalls wird das Absenken der Pfähle 4 mittels der Klemmbacken 25, 26 abgebremst. Unter ihrem Eigengewicht dringen die Pfähle 4 nur teilweise in den Meeresuntergrund 3 ein. Zusätzlich werden sie mit Rammhämmern in den Meeresuntergrund 3 eingetrieben, die oben auf die Pfähle aufgesetzt werden.

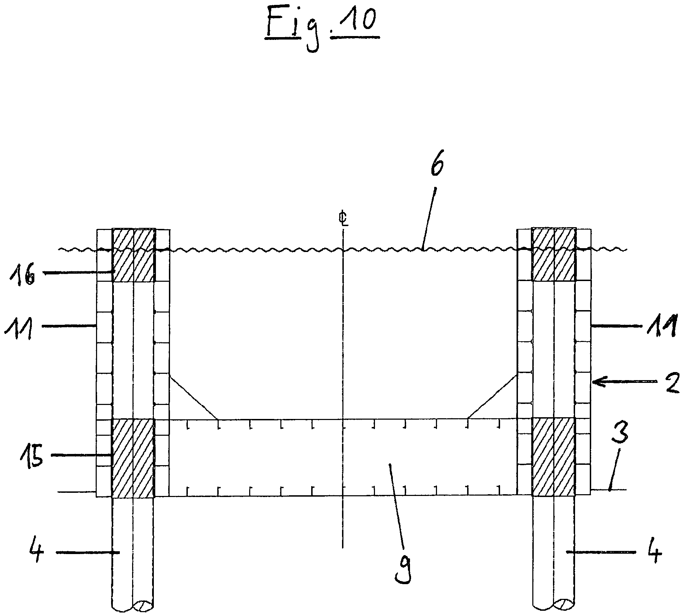

Die Lagerung der Pfähle 4 in den Türmen 11 dient der Führung der Pfähle 4 beim Rammvorgang. Die Pfähle 4 werden in den Meeresuntergrund 3 eingerammt, bis ihr oberes Ende bündig mit dem oberen Ende der Türme 11 ist. Dies ist in Fig. 10 gezeigt.

Danach werden die Pfähle 4 formschlüssig mit der Unterkonstruktion 2 verbunden. Die formschlüssige Verbindung erfolgt vorzugsweise durch Vergrouten. Dafür wird flüssiger Beton oder Kunstharz oder eine andere aushärtende, verpressbare Masse in einen Spalt 36 zwischen Pfahl 4 und unterem Lager 16 eingepresst. Vorzugsweise ist das untere Lager 15 auch mit einer oberen Dichtung 37 versehen, die gemeinsam mit der Druckdichtung 17 verhindert, dass das Groutungsmittel 38 aus dem Spalt 36 austritt. Durch das Vergrouten wird zugleich der Turm 11 unten dauerhaft abgedichtet.

Damit befinden Sie die oberen Öffnungen 35 der Pfähle 4 als Schnittstellen für die Aufnahme der Beine 7 zum Tragen der Plattform 5 zum Installationszeitpunkt oberhalb der Wasseroberfläche 6.

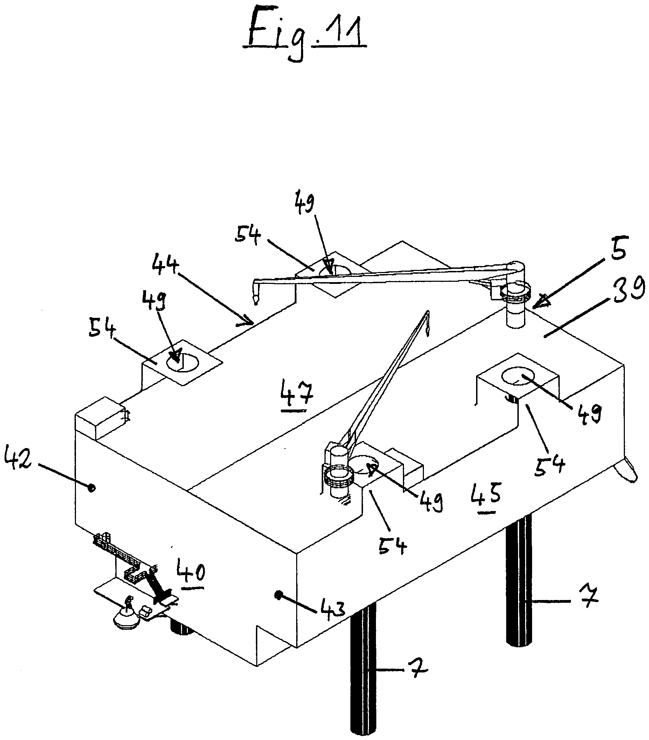

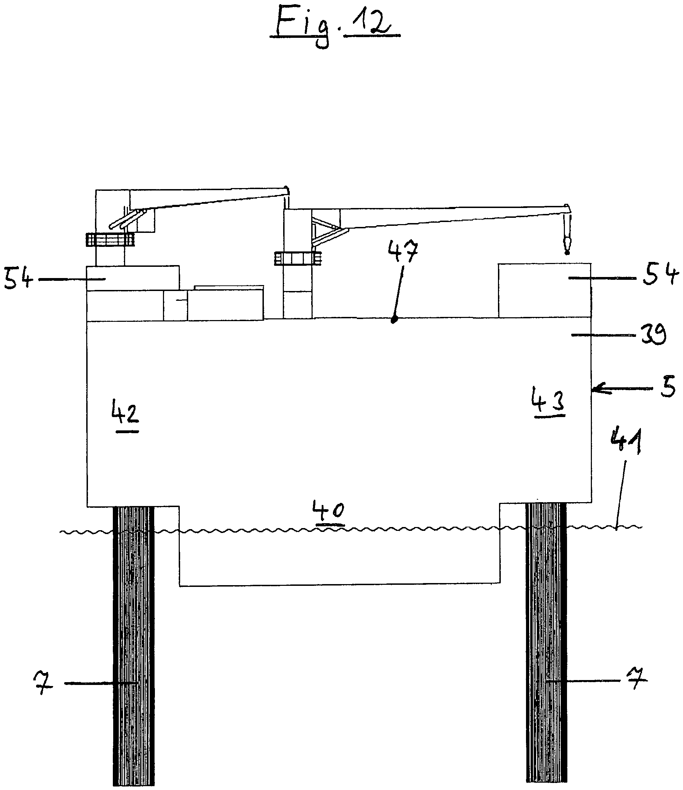

Gemäß Fig. 11 und 12 weist das Plattform-Oberteil 5 einen oberen Baukörper 39 auf, der ein kastenförmiges Mittelteil 40 und oberhalb der Wasserlinie 41, d.h. der Schwimmwasserlinie des Plattform-Oberteils 5, Überhänge 42, 43 aufweist. Die Seitenwände 44, 45 des oberen Baukörpers 39 sind also unterhalb der Überhänge 42, 43 eingerückt. Damit hat der Baukörper 39 einen symmetrischen T-förmigen Querschnitt (vgl. Fig. 12), wobei der Mittelteil 40 den vertikalen T-Pfosten und die Überhänge 42, 43 die seitlich überstehenden Balkenteile des horizontalen T-Balkens bilden.

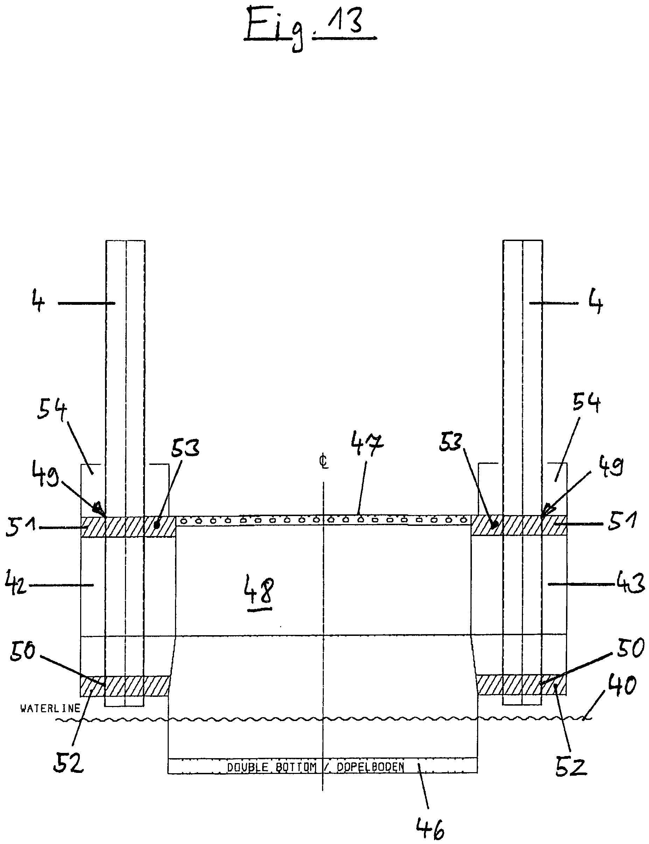

Der Mittelteil 40 ist gemäß Fig. 13 zu den Überhängen 42, 43 hin abgeschottet. Unten weist er einen Doppelboden 46 auf und oben ist er durch ein Hauptdeck 47 geschlossen. Er enthält eine oder mehrere Auftriebszellen 48, die durch Querschotte voneinander getrennt sind.

In den seitlichen Überhängen 42, 43 befinden sich Mittel zum Lagern 49 der Beine 7. Für jedes Bein 7 ist ein unteres Beinlager 50 und ein oberes Beinlager 51 vorhanden, die miteinander fluchten. Das untere Beinlager 50 ist in einer Bodenwand 52 des Überhanges 42, 43 und das obere Beinlager 51 ist in einer Deckwand 53 des Überhanges 42, 43 angeordnet, die ein seitlicher Streifen des Hauptdecks 47 des Plattform-Oberteils 5 ist. Die Bodenwand 52 und die Deckwand 53 der Überhänge 42, 43 weisen an den unteren und oberen Beinlagern 50, 51 Verstärkungen auf. Die unteren und oberen Beinlager 50, 51 sind kreisrunde Durchgangslöcher durch die Bodenwand 52 und die Deckwand 53 an den verstärkten Stellen.

Der obere Baukörper 39 ist auch in Längsrichtung im Wesentlichen symmetrisch.

Im oberen Baukörper 39 können sich Mannschaftsräume bzw. Serviceräume befinden.

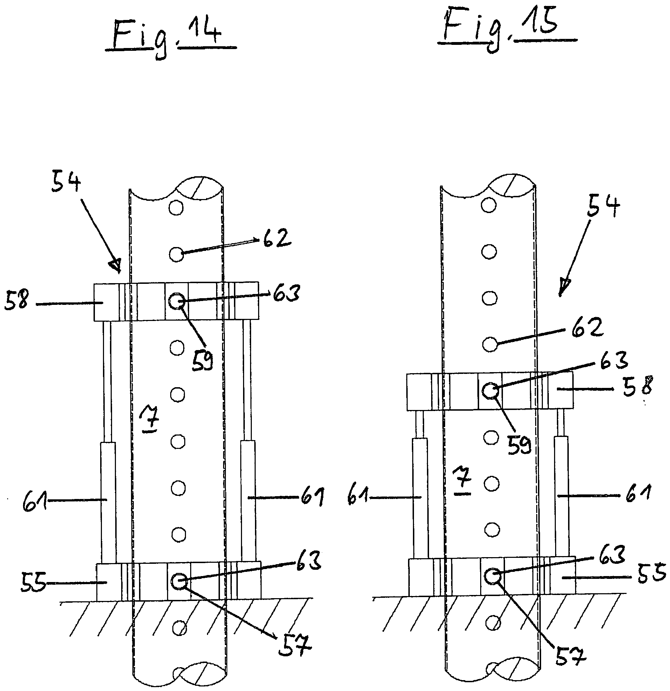

Über jedem oberen Beinlager 51 ist eine Hubvorrichtung 54 (englisch: *jacking system*) vorhanden, die in Fig. 14 und 15 im Einzelnen gezeigt ist. Die Hubvorrichtung 54 weist eine dauerhaft an Deck fixierte feste Brille 55 auf. Hierbei handelt es sich um eine Platte mit einem vertikalen Durchgangsloch 56, durch das ein Bein 7 hindurchführbar ist. Ferner hat die feste Brille 55 ein horizontales Loch 57, das sich von einer Außenseite der festen Brille 55 bis zum Innenumfang des vertikalen Durchgangsloches 56 erstreckt.

Gemäß Fig. 14 und 15 umfasst die Hubvorrichtung 54 eine verlagerbare Brille 58. Hierbei handelt es sich ebenfalls um eine Platte mit einem vertikalen Durchgangsloch 59, das ein Bein 7 aufnimmt. Auch die verlagerbare Brille 58 hat ein horizontales Loch 60, das sich von einer Außenseite der verlagerbaren Brille 58 bis zum Innenumfang des vertikalen Durchgangsloches 59 erstreckt.

Ferner weist die Hubvorrichtung 54 Hydraulikzylinder 61 auf, die unten an der feststehenden Brille 55 und oben an der verlagerbaren Brille 58 fixiert sind. Mittels der Hydraulikzylinder 61 ist die verlagerbare Brille 58 vertikal anhebbar bzw. absenkbar. Es versteht sich, dass zu den Hydraulikzylindern 61 eine hydraulische Steuerung und eine Versorgung mit Hydraulikmedium unter Druck gehört.

Die Beine 7 sind jeweils mit einer Serie horizontaler Sackbohrungen 62 versehen. Wenn die Hubvorrichtung 53 nicht im Betrieb ist, wird das Bein 7 durch Einstecken eines Bolzens 63 in das horizontale Loch 57 der feststehenden Brille 55 und in ein horizontales Sackloch 62 des Beines 7 an des Plattform-Oberteils 5 verriegelt, so dass es in Axialrichtung nicht verlagerbar ist.

Die Hubvorrichtung 54 ist ein Stift-im-Loch-System (englisch: *pin in hole system*). Alternativ kann ein Litzenhebersystem (englisch: *strand jacking system*) vorgesehen werden.

Die Auftriebszellen 48 sind so bemessen, dass der obere Baukörper 39 selbstschwimmend ist, wenn die Beine 7 in den Mitteln zum Lagern 49 der Beine gelagert und mittels der Hubvorrichtungen 54 fixiert sind. Dabei befindet sich die Wasserlinie 41 unterhalb der Überhänge 42, 43.

Ferner ist das Plattform-Oberteil 5 so ausgelegt, dass sie eine stabile Schwimmlage hat, wenn die Beine 7 in die unteren und oberen Beinlager 50, 51 eingesetzt sind und unten nicht über die Überhänge 42, 43 hinaus stehen. Vorzugsweise ist die Breite der Wasserlinie 41 des oberen Baukörpers 39 so gestaltet, dass auf die Aufnahme von Ballast beim Verschwimmen des oberen Baukörpers 39 verzichtet werden kann.

Die Gewichtsverteilung des Plattform-Oberteils 5 ist annähernd homogen. Deshalb ist es nicht erforderlich, Trimmtanks einzusetzen, um das Plattform-Oberteil 5 in einer stabilen Trimmlage zu halten. Im Bedarfsfalle können aber auch Trimmtanks zum Einsatz kommen.

Das Plattform-Oberteil 5 ist selbstschwimmend und verfügt über keinen eigenen Antrieb. Ein Transport auf einer Barge ist also nicht erforderlich.

Zum Beispiel hat das Plattform-Oberteil eine Länge von 73m, eine Breite auf dem Hauptdeck von 49,5m, unten eine Breite von 31,5m und eine Höhe von der Unterkante bis zum Deck von 26,5m.

Gemäß Fig. 16 bis 17 übersteigt der Durchmesser der Beine 7 in einem kurzen Abstand von ihrem unteren Ende den Innendurchmesser der oberen Öffnung 35 der Pfähle 4. Dort haben die Beine 7 jeweils einen Absatz 64, unter dem ihr äußerer Durchmesser um ein bestimmtes Maß kleiner ist als der Innendurchmesser der Pfähle 4. Unten weisen die Beine 7 einen kegelstumpfförmigen Abschnitt 65 auf.

Mit dem kegelstumpfförmigen Abschnitt 65 ist das Bein 7 leicht in die obere Öffnung 35 eines Pfahls 4 einsetzbar, bis der Absatz 64 auf dem oberen Rand des Pfahls 4 aufsitzt. Zwischen dem Abschnitt verringerten Durchmessers des Beins und dem Pfahl verbleibt ein hohlzylindrischer Spalt 65.

Im Beispiel beträgt die Länge der Beine 7 etwa 45m.

Das Plattform-Oberteil 5 kann in einem Baudock einer Werft gebaut werden.

Vorzugsweise werden in der Bauphase die Beine 7 mittels eines (Portal-)Krans in die unteren und oberen Beinlager 50, 51 eingesetzt und mittels Bolzen 63 in den unteren Brillen 55 gesichert.

Für das Verschwimmen des Plattform-Oberteils 5 wird zumindest eine temporäre Dichtigkeit des Plattform-Oberteils 5 sichergestellt.

Danach wird das Plattform-Oberteil 5 am Bauort aufgeschwommen und an die Werftpier zur Endausrüstung und zur Erprobung verholt. Dabei kann die Installation der entfernbaren Komponenten der Hubvorrichtung 54 auf dem Hauptdeck 47 erfolgen.

Danach wird das Plattform-Oberteil 5 im Schleppverband mit entsprechender temporärer Befeuerung zum Installationsort verschwommen.

Am Installationsort wird das Plattform-Oberteil 5 über die Unterkonstruktion 2 eingeschwommen und durch Einweiser bzw. Fender an der Unterkonstruktion 2 zum definierten Zeitpunkt gemäß Wasserstandsanalyse mit Schlepperunterstützung positioniert. Hierbei kann die Unterkonstruktion 2 als Einführ- und Positionierungshilfe genutzt werden.

Danach befinden sich die Beine 7 in den Überhängen 42, 43 genau oberhalb der zugeordneten Pfähle 4 der Unterkonstruktion 2.

Danach werden die Beine 7 mittels der Hubvorrichtungen 54 auf die Pfähle 4 abgesetzt, so dass die Beine 7 mit den unteren Enden in die oberen Öffnungen 35 der Pfähle 4 eingreifen und mit den Absätzen 64 aufsetzen. Das Absenken erfolgt mittels der Hubvorrichtungen 54 in der Gestalt, dass die Hydraulikzylinder 61 auseinander gefahren werden und das horizontale Loch 60 der verlagerbaren Brille 58 auf ein Sackloch 62 eines Beins 7 ausgerichtet wird. Danach wird ein Bolzen 63 in das horizontale Loch 60 und das Sackloch 62 eingesteckt und der Bolzen 63 aus der feststehenden Brille 55 herausgezogen.

Danach werden die Hydraulikzylinder 61 zusammengefahren, wodurch die Beine 7 abgesenkt werden. Sie wurden abgesenkt, bis ein Sackloch 62 des Beines 7 auf das horizontale Loch 57 der feststehenden Brille 55 ausgerichtet ist. Danach werden die Beine 7 jeweils mittels eines Bolzens gesichert, der in das horizontale Loch 57 der feststehenden Brille 55 und das Sackloch 62 des Beines 7 eingesteckt wird. Anschließend wird der Bolzen 63 aus der verlagerbaren Brille 58 herausgezogen und die zuvor beschriebenen Abläufe werden wiederholt, bis die Beine 7 in ihre endgültige Position gelangen.

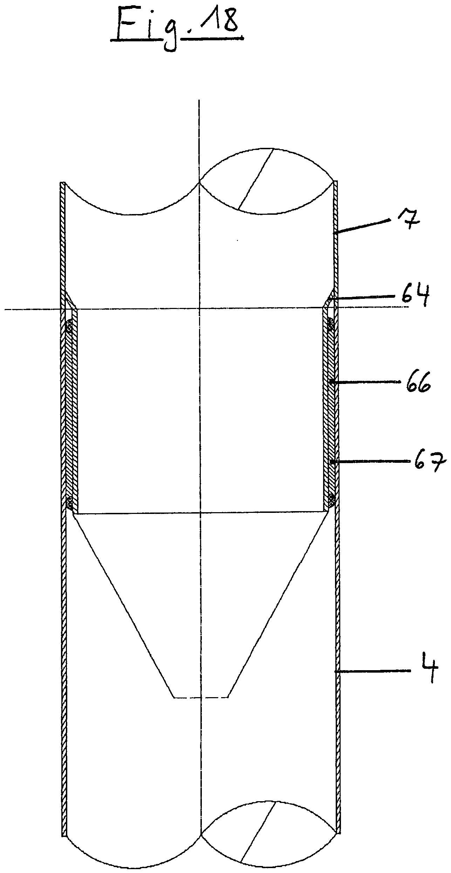

Wenn die Beine 7 gemäß Fig. 18 in die Pfähle 4 eingreifen, werden sie mit formschlüssig mit den Pfählen verbunden. Hierzu werden sie vorzugsweise mit den Pfählen vergroutet, indem ein Groutmittel 67 in den Spalt 66 eingebracht wird.

Die vorstehenden Arbeiten sind verhältnismäßig leicht durchführbar, da sich die Schnittstelle, bzw. Verbindungsstelle zwischen den Beinen 7 und den Pfählen 4 über der Wasseroberfläche 6 oder im Nahbereich unter der Wasseroberfläche 6 befindet.

Nach dem Herstellen einer dauerhaften Verbindung zwischen den Beinen 7 des Plattform-Oberteils 5 und den Pfählen 4 der Unterkonstruktion 2 wird das Plattform-Oberteil 5 auf die vorgegebene Installationshöhe angehoben. Die Installationshöhe ist so gewählt, dass der gemäß Wasserstandsanalyse am Installationsort zu erwartende höchstmögliche Welle ("Jahrhundertwelle") noch unter dem Plattform-Oberteil durchläuft. Im Beispiel beträgt die Installationshöhe 161m über LAT.

Das Anheben des Plattform-Oberteils 5 erfolgt mittels der Hubvorrichtungen 54. Diese werden in der vorbeschriebenen Weise betrieben, wobei das Plattform-Oberteil 5 durch Zusammenziehen der Hydraulikzylinder 61 angehoben wird. Wenn das Plattform-Oberteil 5 die Installationshöhe erreicht hat, werden die Beine 7 in Endposition durch Einstecken von Bolzen 63 in das horizontale Loch 57 der feststehenden Brille 55 und in Sacklöcher 62 der Beine 7 gesichert. Hierfür kann eine elastisch gelagerte Bolzenverbindung eingesetzt werden.

In Fig. 1 ist die fertige Offshore-Plattform 1 gezeigt. Der Kabelturm 32 reicht bis zu einem seitlichen Überhang 42 empor. Dort ist zusätzlich eine Brücke 68 angebracht, über die Seekabel in die Plattform 5 übergeleitet werden können und die Installationsarbeiten erleichtert.

## Patentansprüche

1. Unterkonstruktion für eine Offshore-Plattform (1) umfassend
a. einen selbstschwimmenden unteren Baukörper (8) mit stabiler Schwimmlage,
b. mindestens einen Tank (18) im unteren Baukörper (8), der so dimensioniert ist, dass der untere Baukörper (8) bei geflutetem Tank (18) sinkt,
c. Mittel zum Fluten (19) mindestens eines Tanks (18) und
d. Mittel zum Lagern (11, 15, 16) von Pfählen (4) in aufgerichteter Anordnung am unteren Baukörper (8).

2. Unterkonstruktion nach Anspruch 1, bei der Pfähle (4) in den Mitteln zum Lagern (15, 16) gelagert sind und die mit den Pfählen (4) bestückte Unterkonstruktion (2) selbstschwimmend ist und eine stabile Schwimmlage aufweist.

3. Unterkonstruktion nach Anspruch 1 oder 2, bei der der untere Baukörper (8) einen horizontalen Grundrahmen (9) aufweist.

4. Unterkonstruktion nach einem der Ansprüche 1 bis 3, bei der der untere Baukörper (8) mehrere Tanks (18) umfasst, die in einer horizontalen Ebene seitlich zueinander versetzt angeordnet sind und die Mittel zum Fluten (19) so ausgebildet sind, dass die verschiedenen Tanks (18) gezielt in einem unterschiedlichen Ausmaß flutbar sind.

5. Unterkonstruktion nach einem der Ansprüche 1 bis 4, bei der die Mittel zum Lagern der Pfähle (4) vom unteren Baukörper (8) hochstehende Türme (11) mit jeweils einer unteren und einer oberen Öffnung (13, 14), einem Durchgang zwischenoberer und unterer Öffnung und einem oberen und einem unteren Lager (15, 16) für einen Pfahl aufweisen.

6. Unterkonstruktion nach Anspruch 3, bei der die Türme (11) jeweils einen weiteren Tank (21) aufweisen.

7. Unterkonstruktion nach einem der Ansprüche 1 bis 6 mit Mitteln zum Fixieren (24) der Pfähle in den Mitteln zum Lagern (11, 14, 15) der Pfähle (4) und/oder Mitteln zum Bremsen (24) einer Absenkbewegung der Pfähle (4) bezüglich des unteren Baukörpers (8).

8. Unterkonstruktion nach einem der Ansprüche 1 bis 7 mit Mitteln zum Verbinden (35) mit den Beinen (7) einer Plattform (5) am oberen Ende der Pfähle (4) und/oder der Türme (11).

9. Unterkonstruktion nach einem der Ansprüche 1 bis 8, die so ausgebildet ist, dass die Türme (11) am Aufstellort bei einem bestimmten Wasserstand gemäß Wasserstandsanalyse mit ihren oberen Enden aus der Wasseroberfläche (6) herausragen oder im Nahbereich unter der Wasseroberfläche (6) angeordnet sind und/oder mittels der Pfähle (4) bei dem besagten Wasserstand im Meeresgrund die Pfahlgründung herstellbar ist und die Pfähle mit ihren oberen Enden bis über die Wasseroberfläche (6) hinausragen und/oder im Nahbereich unter der Wasseroberfläche (6) angeordnet sind.

10. Unterkonstruktion nach einem der Ansprüche 1 bis 9, die einen vom unteren Baukörper (8) hochstehenden Kabelturm (32) aufweist.

11. Verfahren geeignet zum Installieren einer Unterkonstruktion für eine Offshore-Plattform (1) gemäß einem der Ansprüche 1 bis 9, bei dem
• die Unterkonstruktion (2) gebaut wird,
• die Unterkonstruktion (2) selbstschwimmend zum Aufstellort auf See verbracht wird,
• die Unterkonstruktion (2) geflutet und auf den Meeresgrund (3) abgesenkt wird und
• die Unterkonstruktion (2) mittels Pfählen (4) am Meeresgrund (3) verankert wird.

12. Verfahren nach Anspruch 11, bei dem die Unterkonstruktion (2) vor dem Transport zum Aufstellort mit Pfählen (4) bestückt und selbstschwimmend mit den Pfählen (4) zum Aufstellort verbracht wird.

13. Verfahren nach Anspruch 11 oder 12, bei dem eine Ausrichtung der Unterkonstruktion (2) beim Absenken durch gezieltes Steuern der beim Fluten in die verschiedenen Tanks (18) einströmenden Wassermengen erfolgt.

14. Verfahren nach einem der Ansprüche 10 bis 13, bei dem die Unterkonstruktion (2) und die Pfähle (4) so auf dem Meeresgrund installiert werden, dass die oberen Enden der Pfähle (4) und/oder der Türme (11) über die Wasseroberfläche (6) hinausstehen oder im Nahbereich unter der Wasseroberfläche (6) angeordnet sind.

15. Verfahren nach einem der Ansprüche 11 bis 14, bei dem die Pfähle (4) nach dem Eintreiben in den Meeresgrund (4) formschlüssig mit der Unterkonstruktion (2) verbunden werden.
